(19) Europäisches Patentamt

European Patent Office

Office européen des brevets

(11) **EP 1 661 628 A1**

(12) **EUROPEAN PATENT APPLICATION**

(43) Date of publication:
**31.05.2006 Bulletin 2006/22**

(51) Int Cl.:
***B05D 1/18*** *(2006.01)*

(21) Application number: **04292817.6**

(22) Date of filing: **25.11.2004**

(84) Designated Contracting States:
**AT BE BG CH CY CZ DE DK EE ES FI FR GB GR
HU IE IS IT LI LU MC NL PL PT RO SE SI SK TR**
Designated Extension States:
**AL HR LT LV MK YU**

(71) Applicants:
• **TOTAL PETROCHEMICALS RESEARCH FELUY**
  **B-7181 Seneffe (Feluy) (BE)**
• **Centre National de la Recherche Scientifique -
  CNRS**
  **75016 Paris Cedex 16 (FR)**

(72) Inventors:
• **Banet, Philippe**
  **Perpignan 66000 (FR)**

• **Brunel, Daniel**
  **34090 Montpellier (FR)**
• **Lerner, Dan**
  **34090 Montpellier (FR)**
• **Fajula, François**
  **34160 Teyran (FR)**
• **Sirol, Sabine**
  **1440 Wauthier-Braine (BE)**
• **Razavi, Abbas**
  **7000 Mons (BE)**

(74) Representative: **Roufosse, Micheline C. et al
Total Petrochemicals Research Feluy
Zone Industrielle C
7181 Seneffe (Feluy) (BE)**

(54) **Process for dispersing functional molecules on the surface of a support and support made by this process**

(57)    The present invention discloses a method for dispersing tethered functional organo-chains, through their dilution with tethered non-functional organo-chains, in the presence of soluble molecular derivatives that are able to self-assemble and to interact with the functional organo-silane.

**Description**

The present invention relates to the field of tunable spatial dispersion of functionality onto inorganic surface with a one-pot procedure.

The attachment of molecular organic structures to inorganic surface provides a unique opportunity to engineer the surface properties. Several approaches have been used to incorporate organic groups and molecules onto the surface of inorganic materials. Hybrid organic-inorganic materials were prepared by direct grafting or deposition onto inorganic surface (metal oxides such as silica , titania, alumina, zirconia, , etc.. or metals such as silicon, gold, platinum...) with organic moieties containing coupling functionalities such as alkoxy or halogeno-silane, phosphonate, phosphinate, sulfonate, carboxylate, olefin, thiol or disulfide as disclosed for example in W.A. Aue and C.R. Hastings, J. Chromatog., 42 (1969) 319, in K.G. Allum, R.D. Hancok, I.V. Howell, S. McKenzie, R.C. Pitkethly and P.J. Robinson, J. Organometal. Chem., 87 (1975) 203, in O. Leal, D.L. Anderson, R.G. Bowman, F. Basolo and R.L. Burwell, Jr, J. Am. Chem. Soc., 97 (1975) 5125, in J.F. Fritz and J.N. King, Anal. Chem., 48 (1976) 570, in P. Tundo and P. Venturello, J. Am. Chem.Soc., 101 (1979) 6606, in H. Engelhardt and P. Orth, J. Liq. Chromatog., 10 (1987) 1999, in A. Cauvel, G. Renard, and D. Brunel, J. Org. Chem., 1997. 62: p. 749, in H.D. Abruna, T.L. Meyer and R.W. Murray, Inorg. Chem., 18 (1979) 3233, in H.D. Abruna, T.L. Meyer and R.W. Murray, Inorg. Chem., 20 (1981) 1481, in P. Sutra, F. Fajula, D. Brunel, P. Lentz, G. Daelen and J. B. Nagy, Colloid and Surfaces, 158 (1999) 21, in D. Brunel, A. Cauvel, F. Di Renzo, F. Fajula, B. Fubini, B. Onida and E. Garrone, New J. Chem., 24 (2000) 807-813, in M. Etienne, J. Bessière and A. Walcarius, Sens. Actuators B, 76 (2001) 531.

A more recent procedure for the preparation of hybrid functionalised silica consists in the one-pot sol-gel synthesis using organic trialkoxysilanes which co-condensate with the tetraalkoxysilane or silicates as silica source as disclosed for example in K.J. Shea, D.A. Loy and D.W. Webster, Chem. Mater., 1 (1989) 574, in D.J. Macquarrie, Chem. Commun., (1996) 1775, in S.L. Burkitt, S.D. Sims and S. Mann, Chem. Commun. (1996) 1367, in R.J.P. Corriu, J.J.E. Moreau, P. Thépot, M. Wong Chi Man, Chem. Mater., 4 (1992), in M.H. Lim, C.F. Blanford and A. Stein, Chem. Mater., 10 (1998) 467.

Assembled monolayer structures possessing functional groups on inorganic surface have wide scientific and practical implications in several fields such as for example adsorption, ion exchange, catalysis, sensing, non-linear optics and biomolecular recognition.

The control of the distribution, mainly the dispersion of the functionalities is crucial to improve the performance of these materials in most of their applications. There are however only few examples in literature dealing with site isolation and controlled distance between the grafted functions. In a first aspect, two amine groups were grafted at a fixed distance from one another by linking them with spacer bearing carbonyl function able to form imine junctions, which had to be removed by a specific reaction after grafting. This method is described for example by Wulff et al. in G. Wulff, B. Heide, G. Helmeier, in J. Amer. Chem. Soc., 1986, 108, 1089; or in G. Wulff, B. Heide, G. Helmeier , in React. Polym., 1987, 6, 299. This strategy was adapted from previous works on molecular imprinting into cross-linked porous polymeric matrix mainly initiated by Shea et al (K.J. Shea and E.A. Thompson, J. Org. Chem 1978, 43, 4253; K.J. Shea, E.A. Thompson, S.D. Pandey and P.S. Beauchamp, J. Am. Chem; Soc., 1980, 102, 3149; K.J. Shea and T.K. Dougherty, J. Am. Chem. Soc., 1986, 108, 1091.) and has spurred others for creating more tailorable active sites inside imprinted polymeric chiral cavity as disclosed by J.J. Becker and M.R Gagné, in Acc. Chem. Res., 2004, 37, 798-804.

Similar methodologies were adopted by Tahmassebi and Sasaki (D.C. Tahmassebi, T. Sasaki, J. Org. Chem., 1994, 59, 679) and by Hwang et al. (K.-O. Hwang, Y. Yakura, F.S. Ohuchi, T. Sasaki, Mater. Sci. Eng., C 1995, 3, 137) or by Liu et al. (J. Liu, Y. Shin, L.-Q. Wang, Z. Nie, J W.D. Samuels,.H. Chang, , G. Fryxell, and G.J. Exarhos, in J. Phys. Chem. A 2000, 104, 8328) or by Shin et al. (Y. Shin, J. Liu, L.-Q. Wang, Z. Nie, G. Fryxell, W.D. Samuels and G.J. Exarhos, Ang. Chem. Int. Ed. 2000, 39, 2702). They anchored two or three aminopropylsilanes using different types of dipod or tripod templates bound by imine bonds for protecting part of the surface during the monolayer coverage with long chain organic silanes. These template molecules were subsequently removed by acid hydrolysis, to leave imprinted rectangular or triangular microcavities in the monolayer coating. It should be noted that this procedure did not give liberated single-surface point but surface portion. Moreover, the distribution of templates on the surface was hardly homogeneous due to possible aggregation of these molecules, resulting in negative effects on the size and shape of the cavities.

Katz and Davis used a similar approach to graft isolated amine groups by direct synthesis of imprinted silica using an in-situ sol-gel methodology (A. Katz and M.E. Davis, Nature , 2000, 403, 286). In this work, the amine functions were protected by a carbamate linkage bearing the imprint that, in addition to providing site isolation, also generates a spatially organised void space when removed. It should be noted that the formation of the final gel with tethered and dispersed amine sites requires also subsequent removal of the imprint molecule and that the control of the site dispersion is provided by two-point bound or one-point bound probe molecule.

Recently, Jones et al have investigated the grafted amine function isolation through a molecular patterning technique using a large tritylimine individually anchored on the silica surface (M. W. McKittrick and C.W. Jones, Chem.

Mater. 2003, 15, 1132-1139 ; M. W. McKittrick and C.W. Jones, J. Am. Chem. Soc., 2004, 126, 3052-3053.) The amine site isolation after silanol capping and hydrolysis of imine bonding function, was controlled by contacting the amine functionalised materials with terephthaloyl choride, leading to mono or di-amide bonded linkage and probing the unreacted monoacid chloride functionality as previously mentioned.

Another strategy was adopted by Bonneviot et al. to create hydrophilic sites in partially silylated micelle-templated silicas (L. Bonneviot, A. Badiei, N. Crowther, US-A-2004/0035791.. As the MCM-41-type silica are usually prepared by cooperative assembly of silicates with a long chain alkyltrimethyl ammonium cation as templating agent, the authors took advantage of the presence of the positively charged surfactant as counter-ion of silicates in the as-made mesoporous silica, to graft the accessible surrounding silanols with a base-generating trimethylsilating agent. After removal of the surfactant, the partially trimethylated material surface contained silanol groups arising from the silicates after displacement of the surfactant, that were uniformly distributed along the mineral surface. These materials with silanol groups surrounded by a hydrophobic environment were available for further surface modification such as for example, further functionalisation by catalytic site grafting. This strategy involved a multi-step procedure and was applicable only with micelle-templated silicas.

These methods are complex and require a long and tedious treatment.

The present invention discloses an alternative strategy to design hybrid materials based on tethered organic chains onto mineral framework and possessing single-site functional chains -LX dispersed between non-functional chains -L. It is based on the dilution of the functional tethering precursor agent with non-functional ones with a ratio larger than 1:4, anticipating a random distribution of functional groups. Preferably, the dispersing agent has the same organo-chain L as the functional ones.

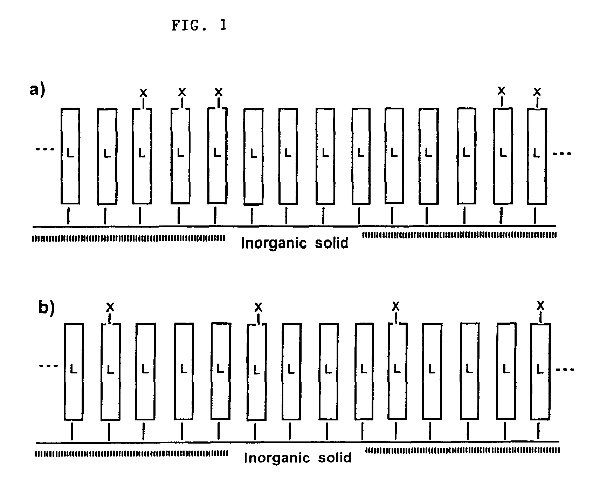

Interactions of functions between themselves and interactions between function and support as for instance, hydrogen bond for amine, can create some functional chain packing during grafting. The closeness of functions can lead to patches of anchored functional chains despite dilution. This is detrimental to a true molecular dispersion of the functions as represented in Figure 1.

Moreau et al. (J.J.E. Moreau, Luc Vellutini, Michel Wong Chi Man, and Catherine Bied, Chem. Eur. J. 2003, 9, 1594-1599) have developed the synthesis of organised tri-dimensional hybrid structures via a homogeneous hydrolysis-condensation reaction of appropriate silylated organic molecules. The method takes into account the possible self-association of classes of compounds by supra-molecular assembly, which is able to direct the spatial organisation of functional organic entities into elongated nanofibre-like structure by making use of multiple hydrogen bondings. This is described for example in J. van Esch, S. de Feyter, R.M. Kellogg, F. de Schryver and B.L. Feringa, Chem. Eur.J. 1997, 3, 1238-1243; in J. van Esch, F. Schoonbeek, M. de Loos, H. Kooijman, A.L. Spek, R.M. Kellogg and B.L. Feringa, Chem. Eur.J. 1999, 5, 937-950; in M. Suzuki, Y. Nakajima, M. Yumoto, M. Kimura, H. Shirai and K. Hanabusa, Org. Biomol. Chem., 2004, 2, 1155-1159; in J.M. Lehn, Angew. Chem. Inter. Ed., 1990, 29, 1304-1319. Thanks to bis-urea groups borne by such precursors, molecules assemble by supra-molecular association caused by multiple hydrogen bondings as described in J. J. E. Moreau, B.P. Pichon, M. Wong Chi Man, C. Bied, H. Pritzkow, J.-L. Bantignies, P. Dieudonne and Jean-Louis Sauvajol, Angew. Chem. Int. Ed. 2004, 43, 203 -206. Interestingly, a chiral silylated diureidocyclohexyl derivative led to hybrid materials with helical morphology and with handedness reflecting the configuration of the organic substructure. This is described in J.J.E. Moreau, L. Velluti, M. Wong Chi Man and C. Bied, J. Am. Chem. Soc, 2001, 123, 1509-1510.

It is an aim of the present invention to use an associative process to allow building patterning during the dual functionalisation of inorganic structures.

It is also an aim of the present invention to develop a one-pot method to disperse functionality on the surface of the support.

It is another aim of the present invention to improve the dispersion of functionality on the surface of the support.

It is a further aim of the present invention to control the dispersion of functionality on the surface of the support.

Accordingly, the present invention provides a method for dispersing tethered functional organo-chains, through their dilution with tethered non-functional oragno-chains, in the presence of soluble molecular derivatives that are able to self-assemble and to interact with the functional organo-silane.

**List of figures.**

Figure 1 represents functionalised hybrid materials:

    a) packed functions X resulting from inadequate dilution of functional anchored chains XL;
    b) dispersed functional chains XL.

Figure 2 represents dispersion of functional anchored chains XL resulting from dilution of non-functional chains L with an auxiliary agent AA'B.

Figure 3 represents dispersion of p-aminophenylsilane anchored on silica surface with phenyl silane as shown by the absence of pyrene interaction.

Figure 4 represents dispersion of p-aminophenylsilane anchored on silica surface with phenyl silane without dispersion effect as shown by pyrene excimer formation.

Figure 5 represents the energy levels of excimer MM*.

Figure 6 represents the anchorage reaction of pyrenesulfonylchloride on para-aminophenylsilane.

Figure 7 represents the absorption spectra of samples S1 to S4 after anchorage of pyrenesulfonylchloride.

Figure 8 represents the infrared spectra of sample S1 before and after anchorage of pyrenesulfonylchloride.

Figure 9 represents the fluorescence emission spectra of samples S1 to S4 after anchorage of pyrenesulfonylchloride

In a preferred embodiment, the present invention provides a method for functionalising an inorganic support that comprises the steps of:

a) providing an inorganic support prepared from a porous material;
b) grafting on the surface of the support

(i) a silane of general formula $R_n R'_{3-n}$ - Si - L - X wherein R is alkyl having from 1 to 4 carbon atoms and the R are the same or different, R' is halogen or is alkoxy having from 1 to 12 carbon atoms and the R' are the same or different, n is an integer from 0 to 2, L is a rigid or a flexible "linker" or arm and X is a functional group enabling covalent bonding by addition or substitution reaction;
(ii) a dispersing agent of formula AA'B wherein A, A' and B are each independently selected from carbonyl, amine, amide, halogen, alcohol, thiol, urea, ether, ester, carbamate, xantante, acid functions or combinations thereof, said dispersing agent being capable to self-assemble and to specifically interact with functional groups X;

c) washing the grafted support of step b) with a polar solvent to remove the auxiliary agent;
d) optionally curing and passivating the grafted support.

The soluble molecular derivative, acting as dispersing agent is preferably compatible with the silane in morphology, and/or in size, and/or in nature, and/or in anchoring capability onto the support, but it has no functional groups X. The ratio of silane to dispersing agent is of from 1:20 to 1:1, preferably of from 1:10 to 1:8.

Optionally, the functionalised material is subsequently cured and passivated.

The procedure of the present invention is based on the formation of supra-molecular assemblies by association of functional organic-bearing moieties and self-assembled auxiliary molecules. This prevents aggregation of the functional organic precursor during the organic-inorganic interface formation.

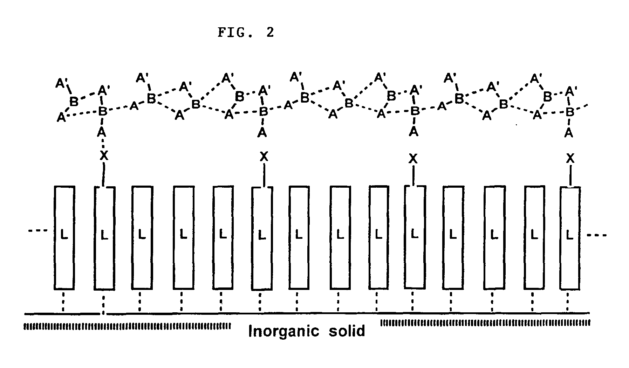

The auxiliary molecules are capable to self-assemble and to specifically interact with functional groups X as depicted in Figure 2. Preferably, the auxiliary molecules are selected from urea derivatives, bis-urea derivatives, thiourea derivatives, triethanolamine, 2,6-amidopyridine, amides, aminoalcohols, aminoacids, cyanuric acid, barbituric acid derivatives, mono-, di- or tri-glycerides or combinations thereof.

The method can be used for dual functionalisation, either via one-pot sol-gel assembly or via one-pot mineral surface grafting.

In a more preferred embodiment according to the present invention, a silica surface is functionalised with a mixture comprising aminoalkyl or aminoaryl silane and alkylsilane or phenylsilane, according to a sol-gel surface polymerisation described for example in T. Martin, A. Galarneau, D. Brunel, V. Izard, V. Hulea, A.C. Blanc, S. Abramson, F. Di Renzo and F. Fajula, in *Stud. Surf Sci. Catal.,* 135 (2001) 29-O-02 or in S. Abramson, M. Laspéras, A. Galarneau, D. Desplantier-Giscard and D. Brunel in Chem. Comm., (2000), 1773-1774. This functionalisation is carried out in the presence of urea derivative as auxilliary molecules. The dual function patterning onto inorganic surface toward single-site functional materials is performed in a single step. The auxiliary urea molecules are subsequently removed during a washing step with polar solvents usually performed after the grafting step.

Preferably, the inorganic support is made from porous mineral oxide particles that have at least one of the following characteristics:

- they include pores having a diameter ranging from 3.5 to 30 nm;
- they have a porosity ranging from 0.4 to 4 $cm^3$ /g;
- they have a specific surface area ranging from 100 to 1500 $m^2$ /g; and
- they have an average diameter ranging from 0.1 to 500 $\mu$m.

The support may be of various kinds. Depending on its nature, its state of hydration or hydroxylation and its ability to retain water, it may be necessary to submit it to a dehydration treatment of greater or lesser intensity depending upon the desired surface content of --OH radicals.

Those skilled in the art may determine, by routine tests, the dehydration and possibly also of dehydroxylation treatments that should be applied to the support, depending on the desired surface content of --OH radicals.

More preferably, the starting support is made of silica. Typically, the silica may be heated between 100 and 1000 °C and preferably between 140 and 800 ° C, under an inert gas atmosphere, such as for example under nitrogen or argon, at atmospheric pressure or under a vacuum of about $10^{-5}$ bars, for at least 60 minutes. For such heat treatment, the silica may be mixed, for example, with $NH_4Cl$ so as to accelerate the dehydration.

In the silane of step b (i), if the "linker" L is a flexible arm, it can be selected from an alkyl having from 1 to 12 carbon atoms, an ether or a thioether. If the "linker" is a rigid arm, it can be selected from an aryl, a mono- or bi-phenyl, a naphtalene, a polyarylether or an ether di-phenol. Preferably the "linker" is a rigid arm and more preferably it is a phenyl. The effect of the rigid linker is to keep away the active sites from the support surface in order to limit undesirable interactions.

The functional group X enables covalent bonding by addition or substitution reaction. It can be selected from a halogen, an hydroxyl, a carboxyl, an amino, an isocyanate or a glycidyl. Preferably, it is a halogen or an amino.

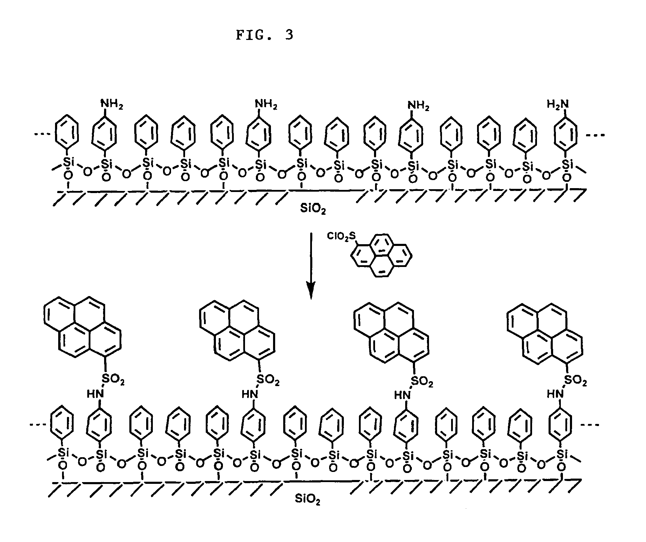

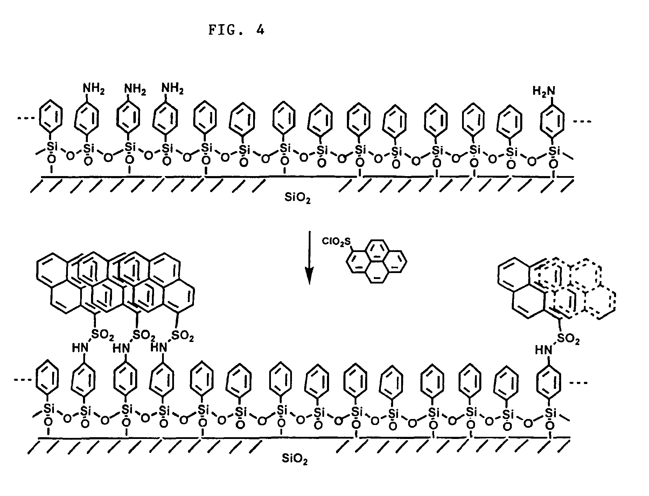

Preferably, the dispersing agent has the same reacting group as the silane with respect to Si in the support. The dispersing agent keeps the functional groups X away from one another thereby creating mono-sites as depicted in Figure 3. This can be compared with the results obtained from a same functionalisation procedure carried out without auxiliary molecule derivative and depicted in Figure 4

The dispersion of the amino groups tethered on the silica surface can be probed by fluorescence studies of pyrene molecules anchored on the amine functions by covalent linkage.

Detection of excimers can be used to determine the efficiency of dispersion as the emission spectra of the monomer or the excimer allow to determine whether molecular entities are close to one another or not, said molecular entities being either free or linked to large molecules or to solids.

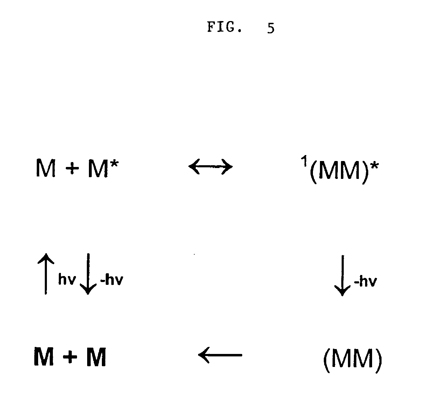

Excimer designates a pair of molecules, preferably identical molecules, formed by diffusion in a medium and wherein one of the molecules M* is in an excited state and the other molecule M is in the fundamental state. The interaction occurring between M and M* consumes a portion of M*'s excitation energy, the remaining energy being shared between the pair MM*. The pair MM* exists for a period of time of a few nanoseconds and then emits photons when returning towards a repulsive ground state as can be seen in Figure 5 representing the energy levels of the pair MM*. Because the complex is loose and because the final state is repulsive, the radiation's geometry is not fixed. Therefore, the excimer's emission spectrum is not structured and exhibits a red shift.

The grafted functional groups are reacted with molecules such as pyrene, that may form excimers if sufficiently close, in order to test their dispersion.

The grafting reaction is carried out at a temperature in the range of 60 to 120 °C under inert atmosphere.

The washing step is carried out at room temperature with a polar solvent that removes the auxiliary dispersing agent. The dispersing agent can be selected from alcohol or water or a mixture thereof.

The curing, if present, is carried out at a temperature between 150 and 200 °C and the passivation is carried out with a silylation agent such as chlorotrimethylsilane, hexamethyldisilazane, trimethylsilylimidazole, N,O-Bis(trimethylsilyl) trifluoroacetamide or another passivation agent that is inert with respect to the functional groups X of the grafted silane.

The present invention also discloses the grafted inorganic supports wherein the functional grafts are efficiently dispersed on the surface of the support.

The functionalised suppports of the present invention can be used to support new single site catalyst components.

These supported catalyst components, when activated with suitable activating agents can be used as oligomerisation or polymerisation catalyst systems.

## Examples.

The starting material for the support was silica purchased from Grace Davisson under the name G5H. It had a specific surface area of 515 m$^2$/g, a pore volume of 1.85 cm$^3$/g, a pore diameter of 14.3 nm and an index (Brunauer-Emmet-Teller) $C_{BET}$ of 103.

The general procedure for grafting by coating was adapted from previous work by Martin et al. ("Towards total hydrophobisation of MCM-41 silica surface," by T. Martin, A. Galarneau, D. Brunel, V. Izard, V. Hulea, A.C. Blanc, S. Abramson, F. Di Renzo and F. Fajula. in Stud. Surf. Sci. Catal., 2001, 135, 29-O-02.

Several grafted silica were prepared.

Example 1: Preparation of grafted support S1.

In S1, the grafting agent is para-aminophenyltrimethoxysilane (n-NH$_2$-Ph-Si) alone.

3g of silica support (3g) were pre-activated by heating at 180°C under vacuum (1Torr) for 18h. It was then cooled to room temperature under argon, and 90 mL of dry toluene were added along with 2.66 g (12.48 mmol) of para-aminophenyltrimethoxysilane (n-NH$_2$-Ph-Si) as grafting agents (5 molecules per nm$^2$). The suspension was stirred under argon at room temperature for 1 h. Then, 224 mL of water (1,5 equiv per added silane), 118 mg of para-toluene sulfonic acid (0.05 equiv per added silane), 23 mg of ammonium fluoride (0.05 equiv. per added silane) were added to the reaction mixture that was stirred for 1 h at room temperature, then heated at 60°C for 6h, then at 120°C for 1 h. During this last step an azeotropic distillation was carried out using a Dean-Starck apparatus.

The functionalised silica was separated by filtration and successively washed twice with 200 mL of toluene, twice with 200 mL of methanol, twice with 200 mL of a mixture of methanol and water in a 1:1 volume ratio, once with 200 mL of methanol and twice with 200 mL of diethyl ether. Finally, the separated samples were subjected to Soxhlet extraction with a mixture of dichloromethane and diethyl ether in a 1:1 volume ratio.

After grafting by coating, the grafted support was cured by heating at a temperature of 170 °C overnight. The porous texture was preserved.

Passivation was then carried out as follows. The materials containing tethered amino chains were evacuated at a temperature of 150°C for 8h, then after cooling to room temperature, they were suspended in dry toluene. 2.8 mL (14 mmol.g$^{-1}$) of trimethylsilylimidazole were added and the reaction mixtures were stirred at a temperature of 60°C overnight.

The solids were separated by filtration and successively washed twice with 200 mL of toluene, twice with 200 mL of methanol, twice with 200 mL of dichloromethane, and twice with 200 mL of diethyl ether. Finally, the solids were subjected to Soxhlet extraction with a mixture of dichloromethane and diethyl ether in a 1:1 volume ratio.

Example 2: Preparation of grafted support S2.

In S2, the same grafting agent n-NH$_2$-Ph-Si was diluted with phenyltrimethoxysilane (n-Ph-Si) in a ratio n-Ph-Si/ n-NH$_2$-Ph-Si of 4.

The procedure is the same as that use to prepare grafted support S1 except that a mixture of 0.53 g (2.5 mmmol) of n-NH$_2$-Ph-Si and 1.97 mg (1.86 mL; 9.96 mmol) of n-Ph-Si were used.

Example 3: Preparation of grafted support S3.

In S3, the same grafting agent n-NH$_2$-Ph-Si was diluted with n-Ph-Si in a ratio n-Ph-Si/n-NH$_2$-Ph-Siof 19.

The procedure is the same as that use to prepare grafted support S1 except that a mixture of 0.13 g (0.6 mmmol) of n-NH$_2$-Ph-Si and 2.34 g (2.21 mL; 11.83 mmol) of n-Ph-Si were used.

Example 4: Preparation of grafted support S4 according to the present invention.

In S4, the same grafting agent n-NH$_2$-Ph-Si was diluted with n-Ph-Si in the presence of methylurea (MeUr) in a ratio n-Ph-Si/ n-NH$_2$-Ph-Si of 9 and MeUr/n- NH$_2$-Ph-Si of 10.

3g of silica support were pre-activated by heating at 180°C under vacuum (1 Torr) for 18 h. It was then cooled to room temperature under argon and 100 mL of a mixture of toluene and methanol (9:1 in volume) were added along with a mixture of 0.27 g (0.25 mmol) of para-aminophenyltrimethoxysilane, 2.1 mL (11.2 mmol) of phenyltrimethoxysilane, and 0.9 g (12.2 mmol) of the dispersing agent methylurea (5 molecules per nm$^2$). The suspension was stirred under argon at room temperature for 30 minutes and at 60°C for 1 hour. Then, 224 mL (1.5 equiv per added silane) of water, 118 mg (0.05 equiv. per added silane) of *para*-toluenesulfonic acid and 23 mg (0.05 equiv. per added silane) of ammonium fluoride were added to the reaction mixture that was stirred for 1 hour at a temperature 70°C, then for 1 hour at a temperature of 85°C and for 1 hour at a temperature of 120°C. During this last step an azeotropic distillation was carried out using a Dean-Starck apparatus.

The functionalised silica was separated by filtration and successively washed twice with 200 mL of toluene, twice with 200 mL of methanol, twice with 200 mL of a mixture of methanol and water in a 1:1 volume ratio, once with 200 mL of methanol and twice with 200 mL of diethyl ether. Finally, the separated samples were subjected to Soxhlet extraction with a mixture of dichloromethane and diethyl ether in a 1:1 volume ratio.

After grafting by coating, the grafted support was cured by heating at a temperature of 170 °C overnight. The porous texture was preserved.

The passivation step was identical to that used in the preparation of S1 to S3.

The characteristics of the grafted supports are displayed in Table I.

**TABLE I**

| Sample | S1 | S2 | S3 | S4 |
|---|---|---|---|---|
| Pore diam. nm | 14.4 | 15.9 | 15.6 | 14.5 |
| $C_{BET}$ | 33 | 28 | 25 | 32 |
| water cnt. % | 1.1 | 0.8 | 0.8 | 0.5 |
| org. cont. % | 15.76 | 16 | 15.2 | 16.5 |
| total grafts/nm$^2$ | 1.9 | 1.9 | 1.9 | - |
| n-NH2-Ph-Si grafts/nm2 | 1.9 | 0.53 | 0.16 | - |

The dispersion of the functional groups on the surface of the support was then determined by reacting these functional groups with pyrene

Pyrenesulfonylchloride (PSC) was first synthesised. A solution of 0.41 g (1.45 mmol) of pyrenesulfonicacid in 16 mL of thionylchloride was heated at a temperature of 80°C until the emanation of $SO_2$ and HCl stopped. Then, the excess thionylchloride was distilled under reduced pressure and the residue was dissolved in 20 mL of dimethylformamide.

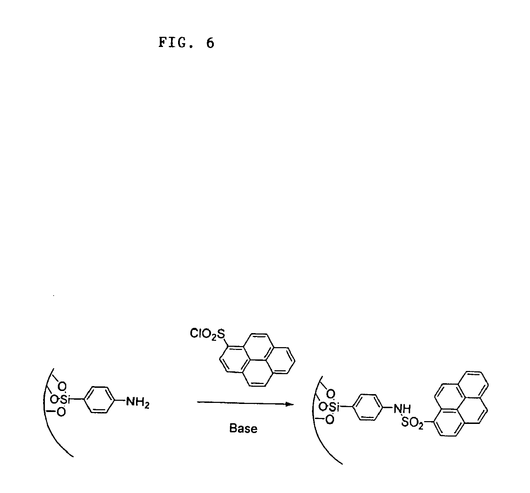

Pyrenesulfonylchloride was then anchored onto the aminohydrocarbylsilane-grafted silica as represented in Figure 6. The materials containing tethered amino chains were evacuated at 150°C for 18 hours, then after cooling to room temperature, they were suspended in dimethylformamide. Then, a solution of 0.072 mol/L of pyrenesulfonylchtoride in dimethylformamide and a base were added in a ratio of 2 equivalents of pyrenesulfonylchloride to 1 equivalent of grafted aminosilane and 2 equivalents of base to 1 equivalent of grafted aminosilane. The reaction mixture was stirred at ambient temperature for 18 hours. The solids were separated by filtration and successively washed twice with 200 mL of dimethylformide, twice with 200 mL of methanol, twice with 200 mL of dichloromethane and twice with 200 mL of diethylether.

The base used was 1,8-diazabicyclo[5.4.0]undec-7-ene (DBU) for sample S1 to S3 and triethylamine for sample S4.

The amounts of grafted aminosilane, pyrenesulfonylchloride and base used in the anchorage reaction were as disclosed in Table II.

**TABLE II.**

| Sample | grafted aminosilana | PSC | base |
|---|---|---|---|
| S1 | 0.27g (1 mmol) | 10 mL | 100 $\mu$L |
| S2 | 0.80 g (1 mmol) | 8 mL | 86 $\mu$L |
| S3 | 0.80 g (1 mmol) | 2 mL | 28 $\mu$L |
| S4 | 0.80 g (1 mmol) | 8 mL | 86 $\mu$L |

The characteristics of the samples after anchorage of pyrenesulfonylchloride are summarised in Table III.

**TABLE III.**

| Sample | S1 | S2 | S3 | S4 |
|---|---|---|---|---|
| Pore diam. nm | 13.9 | 14.2 | 15.0 | 14.0 |
| $C_{BET}$ | 51 | 31 | 27 | 39 |
| pyrene anch. % | 17 | 23 | 31 | - |

Absorption spectra of hybrid material in the UV-visible portion were measured with an apparatus based on diffuse reflection, Perkin-Elmer Lambda 14, equipped with an integrating sphere Labsphere, North Sutton, USA. Silica was deposited in a well, having a depth of 0.05 mm, dug in a quartz slide which was then covered with a standard quartz slide (QS-100 cell, Hellma). The reference cell was filled with $BaSO_4$. The spectra were obtained using the Kubelka-Munk (KM) transform.

$$KM = (1\text{-reflectance})^2 / 2.\ reflectance$$

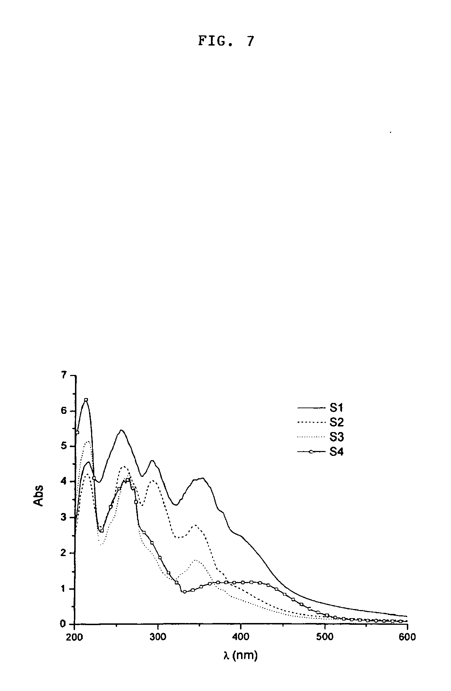

After the anchoring of pyrene, a new absorption zone beyond 320 nm, up to over 420 nm was linked to the presence of pyrene, as shown on figure 7. That complementary absorption corresponds to the absorption of pyrene aggregates. Absorption increased with increasing functional graft content thereby showing that the amount of pyrene anchored was proportional to the density of functional grafts.

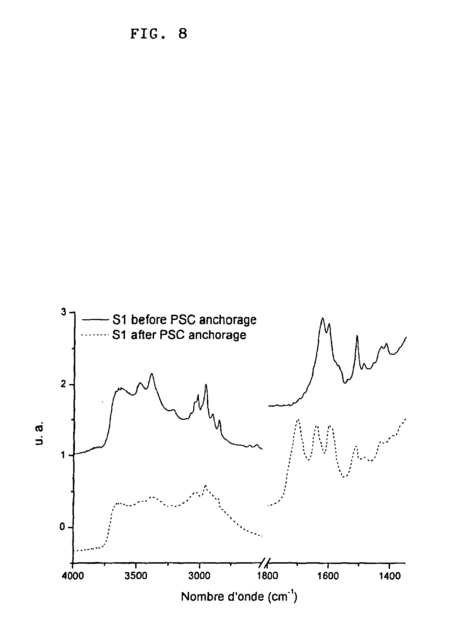

In addition, all infrared spectra after pyrene anchorage showed that bands $v$(N-H) at 3480-3390 cm$^{-1}$ and $\delta$(N-H) at 1625 cm$^{-1}$ were less intense than those of the parent material thereby showing that amine groups had reacted and thus that the anchoring reaction was successful. This is represented in Figure 8. This observation was confirmed by elemental and thermo-gravimetric analysis of material before and after grafting and displayed in Table IV.

**TABLE IV.**

| Sample | Elemental analysis | | | | Thermo-gravimetry |
|---|---|---|---|---|---|
| | N | | S | | orga/SiO$_2$ |
| | mmol/g | mol/nm$^2$ | mmol/g | mol/nm$^2$ | |
| S1<br>S1-SO$_2$-pyrene | 1.24<br>1.81 | 1.9<br>3.5 | x<br>0.17 | x<br>0.33 | 19.1<br>34.4 |
| S2<br>S1-SO2-pyrene | 0.37<br>0.54 | 0.53<br>0.86 | x<br>0.08 | x<br>0.12 | 18.6<br>23.0 |
| S3<br>S1-SO$_2$-pyrene | 0.11<br>0.12 | 0.16<br>0.18 | x<br>0.03 | x<br>0.05 | 18.1<br>19.3 |
| S4<br>S1-SO$_2$-pyrene - | -<br> | -<br>- | | | 19.9<br>21.2 |
| x means undetectable | | | | | |

The adsorption and desorption isotherms of nitrogen at 77 °K before and after grafting were similar, indicating that the material porous structure was preserved. Chemical reactions thus did not affect the material's structure.

Fluorescence spectra were also obtained. They were carried out on a spectrofluorimeter built around two Jobin Yvon M25 mono-chromators each carrying a 1200 lines/mm grid (Czerny-turner, 1/4m). Each mono-chromator carries continuously adjustable slits. Detection is carried out with a R928 photomultiplier (Hamatsu). For the recording of spectra, the pass-band was fixed at 8 nm. Measurements were carried out with a right angle or with a frontal geometry, with the cell at an angle of 60 degrees with respect to the incident beam. The samples were prepared:

- either between two quartz slides as described for the diffuse reflectance method;
- or as thin films obtained by sprinkling a section of adhesive tape (Scotch 3M) stretched on a rigid frame.

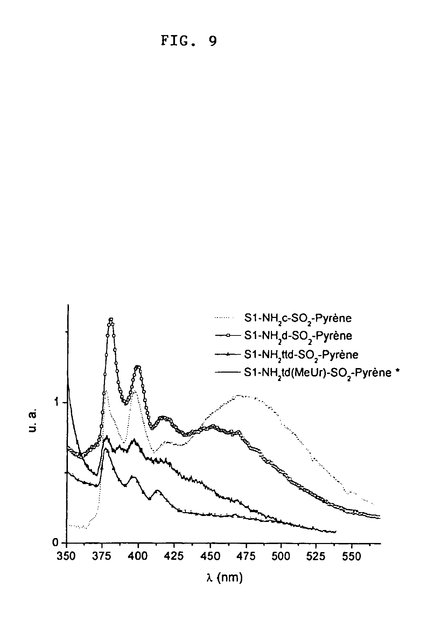

These spectra are represented in Figure 9 for all four samples.

In addition to the monomer fluorescence bands at 376 and 390 nm, a large peak centered at about 460 nm was observed for samples S1 to S3, prepared without methylurea. This peak was related to the fluorescence emission of the excimer. This implies that mixing two organosilanes could dilute the para-aminophenylsilane while keeping the number of grafts constant, but it also implies that the functional grafts were not dispersed as evidenced by the presence of excimers. This lack of dispersion could be attributed to interactions between the amine groups of several para-aminophenylsilane favouring their packing.

On the contrary, sample S4 according to the present invention prepared with the addition of methylurea as dispersing agent only showed the fluorescence emission of the monomer at 376 and 390 nm. The addition of methylurea was thus very efficient in dispersing the functional grafts on the surface of the support.

**Claims**

1. A method for dispersing tethered functional organo-chains, through their dilution with tethered non-functional organo-chains, in the presence of soluble molecular derivatives that are able to self-assemble and to interact with the functional organo-silane.

2. The method of claim 1 that comprises the steps of:

   a) providing an inorganic support prepared from a porous material;
   b) grafting on the surface of the support:

   i) a silane of general formula $R_nR'_{3-n}$ - Si - L - X wherein R is alkyl having from 1 to 4 carbon atoms and the R are the same or different, R' is halogen or is alkoxy having from 1 to 12 carbon atoms and the R' are the same or different, n is an integer from 0 to 2, L is a rigid or a flexible "linker" or arm and X is a functional group enabling covalent bonding by addition or substitution reaction;
   ii) a dispersing agent of formula AA'B wherein A, A' and B are each independently selected from carbonyl, amine, amide, halogen, alcohol, thiol, urea, ether, ester, carbamate, xantante, acid functions or combinations thereof, said dispersing agent being capable to self-assemble and to specifically interact with functional groups X;

   c) washing the grafted support of step b) with a polar solvent to remove the auxiliary agent;
   d) optionally curing and passivating the grafted support.

3. The method of claim 2 wherein the silane has a rigid arm L selected from aryl, mono- or bi-phenyl, naphtalene, polyarylether or ether di-phenol.

4. The method of claim 3 wherein the rigid arm L is phenyl.

5. The method of claim 2 wherein the silane has a flexible arm selected from an alkyl having from 1 to 12 carbon atom.

6. The method of any one of claims 2 to 5 wherein the functional group X is selected from halogen, hydroxyl, carboxyl, amino, isocyanate or glycidyl.

7. The method of claim 6 wherein the functional group is halogen or amino.

8. The method of any one of the preceding claims wherein the dispersing agent is selected from urea derivatives, bis-urea derivatives, thiourea derivatives, triethanolamine, 2,6-aminopyridine, amides, aminoalcohols, aminoacids, cyanuric acid, barbituric acid derivatives, mono-, bi- or tri-glycerides or combinations thereof.

9. The method of any one of the preceding claims wherein the ratio of silane to dispersing agent is of from 1:20 to 1:1.

10. An inorganic support grafted with tethered functional organo-chains dispersed on its surface obtainable by the method of any of claims 1 to 9.

FIG. 1

FIG. 2

Inorganic solid

FIG. 3

FIG. 4

FIG.   5

$$M + M^* \quad \longleftrightarrow \quad {}^1(MM)^*$$

$$\uparrow h\nu \downarrow {-}h\nu \qquad\qquad\qquad \downarrow {-}h\nu$$

$$M + M \quad \longleftarrow \quad (MM)$$

FIG. 6

EP 1 661 628 A1

FIG. 7

FIG. 8

FIG. 9

**European Patent Office**

**PARTIAL EUROPEAN SEARCH REPORT**   Application Number

which under Rule 45 of the European Patent Convention shall be considered, for the purposes of subsequent proceedings, as the European search report

EP 04 29 2817

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 6 258 454 B1 (LEFKOWITZ STEVEN M ET AL) 10 July 2001 (2001-07-10) * the whole document * ----- | 1-10 | B05D1/18 |

TECHNICAL FIELDS SEARCHED   (Int.Cl.7)

B05D

## INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| The Hague | 26 April 2005 | Brothier, J-A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C07)

**European Patent Office**

**INCOMPLETE SEARCH**
**SHEET C**

Application Number

EP 04 29 2817

Claim(s) searched incompletely:
      1-10

Reason for the limitation of the search:

Present claims 1-10. relate to a method/product defined by reference to a desirable characteristic or property, namely " able ...to interact with the fonctional organo-silane".

The claims cover all methods/products having this characteristic or property, whereas the application provides support within the meaning of Article 84 EPC and/or disclosure within the meaning of Article 83 EPC for only a very limited number of such methods/products. In the present case, the claims so lack support, and the application so lacks disclosure, that a meaningful search over the whole of the claimed scope is impossible. Independent of the above reasoning, the claims also lack clarity (Article 84 EPC). An attempt is made to define the methods/products by reference to a result to be achieved. Again, this lack of clarity in the present case is such as to render a  meaningful search over the whole of the claimed scope impossible.

Furthermore, in present claim 2 the Markush formula AA'B relate to an extremely large number of possible compounds. In fact, the claims contain so many options, variables, possible permutations and provisos that a lack of clarity (and conciseness) within the meaning of Article 84 EPC arises to such an extent as to render a meaningful search of the claims impossible. It must also be noted that in example S4 (only working example) the compound used as the dispersing agent is methylurea which does not fall in the formula AA'B.

Consequently, the search has been carried out for those parts of the claims which appear to be clear, supported and disclosed, namely those parts relating to the method of claim 1 wherein the tethered functional organo-chain is an amino functional trialkoxysilane of formula $R'_3-Si-L-NH_2$ (R' is an alkoxy as described in claim 2b)ii) and L is the linker of claim 2b)ii)) ), the non functional organo-silane is the same molecule without the amino group ($R'_3-Si-L-H$) and soluble molecular derivative is methylurea as in example S4.

## ANNEX TO THE EUROPEAN SEARCH REPORT
## ON EUROPEAN PATENT APPLICATION NO.

EP 04 29 2817

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2005

| Patent document cited in search report | | Publication date | Patent family member(s) | | Publication date |
|---|---|---|---|---|---|
| US 6258454 | B1 | 10-07-2001 | US | 2001051221 A1 | 13-12-2001 |

For more details about this annex : see Official Journal of the European Patent Office, No. 12/82